# EUROPEAN PATENT APPLICATION

(11) **EP 2 838 018 A1**
(43) Date of publication of application: **18.02.2015**
(21) Application number: 13834733.1
(22) Date of filing: 26.06.2013
(51) Int. Cl.: G06F 9/455, G06Q 50/06

(54) **BUILDING ENERGY SIMULATION METHOD USING BIM**

(30) Priority: 04.09.2012 KR 20120097690
(71) Applicant: University-Industry Cooperation Group of Kyung Hee University, Gyeonggi-do 446-701 (KR); Research & Business Foundation Sungkyunkwan University, Gyeonggi-do 440-746 (KR); Kyungpook National University Industry-Academic Cooperation Foundation, Daegu 702-701 (KR)
(72) Inventor: CHOO, Seung Yeon, Daegu 705-030 (KR); LEE, Kweon Hyoung, Daegu 702-819 (KR); KIM, In Han, Seoul 137-921 (KR); CHOI, Jung Sik, Suwon-si Gyeonggi-do 442-783 (KR); PARK, Cheol Soo, Suwon-si Gyeonggi-do 442-150 (KR); KIM, Young Jin, Seoul 132-814 (KR); AHN, Ki Uhn, Seoul 150-750 (KR)
(74) Representative: Pallini Gervasi, Diego
(86) International application number: PCT/KR2013/005644
(87) International publication number: WO 2014/038777

(57) **Abstract**

The present invention relates to a building energy simulation method may include the steps of: inputting building geometry and coded material information into a building information input program to generate a building information file; importing the building information file into a middleware; mapping the imported coded material information with the imported building geometry through the middleware; and converting the mapped building geometry and the mapped coded material information into an energy simulation program file through the middleware. The building geometry, the coded material information, and the coded space type information may be interconnected through the building information input program which supports BIM, and energy-simulated on the energy simulation program (EnergyPlus or program based on ISO 13790).

## Description

### [Technical field]

The present invention relates to a building energy simulation method, and more particularly, to a building energy simulation method using building information modeling (BIM), which inputs building geometry, coded material information, and coded space type information through a building information input program, interconnects the input information, converts the interconnected information into an energy simulation program file through a middleware, and performs energy simulation through an energy simulation program.

### [Background Art]

According to a conventional building energy simulation method using EnergyPlus, remodeling for energy simulation has been performed on the basis of an existing building plan, and material information specified in the building plan has been used to perform the remodeling.

When open BIM is applied, building information may not be normally transmitted due to the incompatibility of the information. In this case, interconnection of the material information may not be accomplished, but re-inputted through an energy simulation program.

Thus, the development of middleware for interconnection with the energy simulation program is required to perform energy simulation on building geometry inputted through a building information input program.

### [Disclosure]

### [Technical Problem]

It is an object of the present invention to provide a building energy simulation method using BIM, which includes a middleware for interconnection with an energy simulation program to perform energy simulation for building geometry inputted through a building information input program.

Another object of the present invention is to provide a building energy simulation method using BIM, which interconnects coded material information and coded space type information with building geometry so as to perform energy simulation.

### [Technical Solution]

According to an embodiment of the present invention, a building energy simulation method may include the steps of: (a) inputting building geometry and coded material information into a building information input program to generate a building information file; (b) importing the building information file into a middleware; (c) mapping the imported coded material information to the imported building geometry through the middleware; and (d) converting the mapped building geometry and the mapped coded material information into an energy simulation program file through the middleware.

The building energy simulation method may further include the step of (e) importing the energy simulation program file into an energy simulation program to perform energy simulation, after the step (d).

The building energy simulation method may further include the step (b') of checking the imported building geometry and the imported coded material information, after the step (b).

The step (b') may include simplifying the imported building geometry.

The simplifying of the imported building geometry may further include automatically generating an undefined space boundary among essential boundary conditions of the imported building geometry.

The simplifying of the imported building geometry may further include straightening curved and atypical elements.

The building energy simulation method may further include the step (b'') of displaying the checked building geometry and the checked coded material information, after the step (b').

The step (b") may include correcting the displayed building geometry and the displayed coded material information.

The step (c) may include comparing the imported coded material information to material codes of a material library code module.

When the material library code module has no material code corresponding to the imported coded material information, a material code generating module may be interconnected.

The material code generating module may include a window code generating module, and the window code generating module may receive a heat transmission coefficient (U-factor) and a solar heat gain coefficient (SHGC), in which a glass type and a frame are considered, and generate a window code.

The step (e) may include performing energy simulation through the energy simulation program to generate an energy simulation file including the energy simulation result.

The building energy simulation method may include the step (f) of importing the energy simulation file into the middleware, after the step (e), and the energy simulation result of the imported energy simulation file may be displayed through the middleware, data for comparison with previously stored energy simulation results may be displayed on the middleware, and the energy simulation result and the comparison data may be generated as a report file.

The building information input program may support building information modeling (BIM).

The middleware may include an interoperable building energy simulation tool (IBEST).

The energy simulation program may include EnergyPlus.

The energy simulation program may include a program based on ISO 13790.

According to another embodiment of the present invention, a building energy simulation method may include the steps of: (a) inputting building geometry, coded material information, and coded space type information to a building information input program to generate a building information file; (b) importing the building information file into a middleware; (c) mapping the imported coded material information and the imported coded space type information to the imported building geometry through the middleware; and (d) converting the mapped building geometry, the mapped coded material information, and the mapped coded space type information into an energy simulation program file through the middleware.

The step (c) may include comparing the imported coded space type information to space type codes of a space type library code module.

When the space type library code module has no space type code corresponding to the imported coded space type information, a space type code generating module may be interconnected.

### [Advantageous Effects]

According to the embodiments of the present invention, the building energy simulation method may perform energy simulation for a complex building geometry inputted through the building information input program.

Furthermore, the building energy simulation method may perform energy simulation for building geometry interconnected with material information.

Furthermore, information may be checked, simplified, corrected, and generated on the middleware (IBEST), and the energy simulation result may be displayed, compared, and generated as a report file, which makes it possible to increase user convenience.

### [Description of Drawings]

FIG. 1 is a configuration diagram of a building information input program, a middleware, and an energy simulation program, which are used in a building energy simulation method according to an embodiment of the present invention.
FIG. 2 is a flowchart illustrating the building energy simulation method according to the embodiment of the present invention.
FIG. 3A is a flowchart illustrating an example of a process for simplifying building geometry.
FIG. 3B is a flowchart illustrating another example of the process for simplifying building geometry.
FIG. 4 is a flowchart illustrating an example of a process for mapping coded material information.
FIG. 5 is a flowchart illustrating an example of a process for mapping coded space type information.

### [Mode for Invention]

Hereinafter, "IBEST" represents an interoperable building energy simulation tool, and is defined as a middleware for interconnecting a building information input program and an energy simulation program. The building information input program indicates a program which supports building information modeling (BIM). The detailed configuration and function of the IBEST will be described below.

In the following descriptions, "space" indicates an internal part defined by building skins such as walls and a roof, and corresponds to an energy simulation target.

Furthermore, "essential boundary condition" is defined as a building skin which is essentially required for defining the "space".

### Descriptions of Configuration

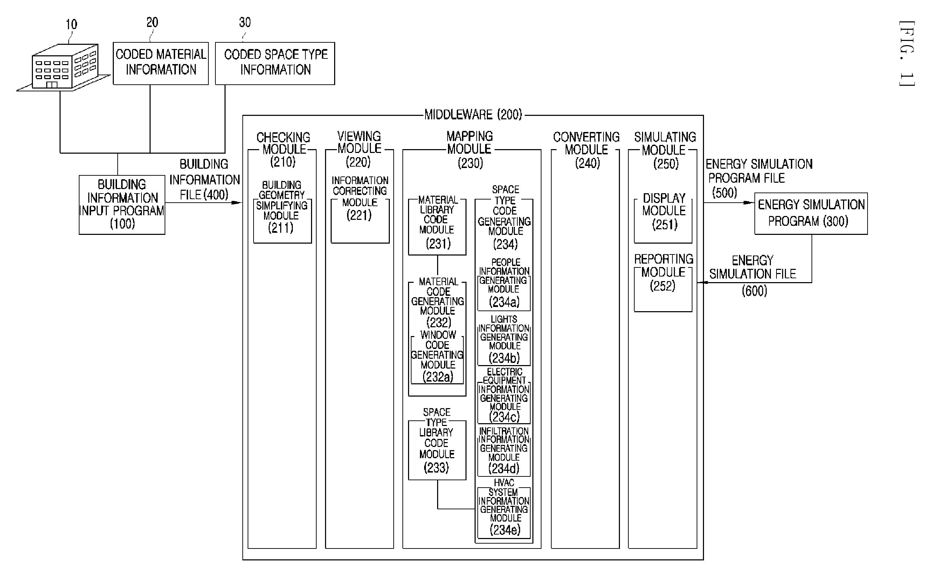

Hereinafter, a building information input program 100, a middleware 200, and an energy simulation program 300, which are used for a building energy simulation method according to an embodiment of the present invention, will be described in detail with reference to FIG. 1.

Through the building information input program 100, building geometry 10, coded material information 20, and coded space type information 30 are inputted. The building geometry 10, the coded material information 20, and the coded space type information 30 are generated as a building information file 400.

For example, the building information input program 100 may include a program which supports BIM. A user may input the building geometry 10, the coded material information 20, and the coded space type information 30 through the program which supports BIM.

Conventionally, the building geometry 10 and the material information have been inputted as general names and numerical values. Since the BIM lacks information for energy analysis and has a difference in information structure from the energy simulation program 300, the building geometry 10 and the material information could not be interconnected for energy simulation.

In the present invention, as a coded material information system is developed to input the coded material information 20, the building geometry 10 and the material information may be interconnected to perform energy simulation. The coded material information system will be described below in detail.

Furthermore, as a coded space type information system is developed to input the coded space type information 30, the building geometry 10 and the space type information may be interconnected to perform energy simulation. The coded space type information system will be described below in detail.

When the building information input program 100 supports BIM, the building geometry 10, the coded material information 20, and the coded space type information 30 may be inputted through the building information input program 100 to generate a building information file (*.ifc) 400.

The middleware 200 imports the building information file 400 generated by the building information input program 100, processes the imported building information file 400, and converts the processed building information file 400 into an energy simulation program file 500.

For example, the middleware 200 may include IBEST. In this case, the middleware 200 imports the building information file (*.ifc) 400 and converts the imported building information file (*.ifc) 400 into the energy simulation program file (*.idf) 500. Although described below, the converted energy simulation program file (*.idf) 500 may be energy-simulated through an interface of EnergyPlus or simulated on the middleware 200 through the EnergyPlus engine embedded in the middleware 200, and the simulation result may be provided as a report file and a graph.

For example, the middleware 200 may include a checking module 210, a viewing module 220, a mapping module 230, a converting module 240, and a simulating module 250.

The checking module 210 checks the building geometry 10, the coded material information 20, and the coded space type information 30 of the building information file imported by the middleware 200. That is, the checking module 210 checks an error in the building geometry 10, the coded material information 20, and the coded space type information 30.

Desirably, the middleware may include a debugging function of correcting an error after error checking.

The checking module 210 may include building geometry simplifying module 211, for example.

The building geometry simplifying module 211 simplifies the building geometry 10 of the building information file 400 imported by the middleware 200.

The building geometry simplifying module 211 may simplify the building geometry 10 by automatically generating an undefined space boundary among the essential boundary conditions of the building geometry 10, for example.

For another example, the building geometry simplifying module 211 may simplify the building geometry 10 by straightening a curved or atypical element of the building geometry 10.

Through the building geometry simplifying method, the energy simulation program 300 and the middleware 200 may perform energy simulation for a complex building geometry.

The viewing module 220 may display the checked building geometry 10, the checked coded material information 20, and the checked coded space type information 30 such that a user can see the displayed information.

For example, the viewing module 220 may include an information correction module 221, and the user may correct desired information among the building geometry 10, the coded material information 20, and the coded space type information 30, which are displayed through the viewing module 220, using the information correction module 221, and generate energy-related attribute information.

The mapping module 230 maps the building geometry 10, the coded material information 20, and the coded space type information 30, which are checked and corrected through the viewing module 220.

The mapping module 230 may include a material library code module 231 and a material code generating module 232.

The material library code module 231 compares material codes stored there to the coded material information 20 and determines whether there exists a material code corresponding to the coded material information 20. The material codes stored in the material library code module 231 may correspond to ASHRAE (American Society of Heating, Refrigerating, and Air-Conditioning Engineers), for example.

When it is determined that there exists a material code corresponding to the coded material information 20, the material code may be used for a converting operation which will be described below. When no corresponding material exists, the material code generating module 232 may be interconnected.

The user may generate a material code which is not stored in the material library code module 231, through the material code generating module 232.

For example, the material code generating module 232 may include a window code generating module 232a. The window code generating module 232a may receive a heat transmission coefficient (U-factor) and a solar heat gain coefficient (SHGC), in which a glass type, a frame and the like are considered, and generate a window code. Through the generated window code, the material code generating module 232 may generate a material code.

The mapping module 230 may further include a space type library code module 233 and a space type code generating module 234.

The space type library code module 233 compares space type codes stored therein to the coded space type information 30, and determines whether there exists a space type code corresponding to the coded space type information 30. The space type codes stored in the space type library code module 233 may correspond to space type classification of ASHRAE, for example.

When it is determined that there exists a space type code corresponding to the coded space type information 30, the space type code may be used for the converting operation which will be descried below. When no corresponding space type code exists, the space type code generating module 234 may be interconnected.

The user may generate a space type code, which is not stored in the space type library code module 233, through the space type code generating module 234.

For example, the space type code generating module 234 may include a people information generating module 234a, a lights information generating module 234b, a electric equipment information generating module 234c, an infiltration information generating module 234d, and an HVAC system information generating module 234e.

The people information generating module 234a may receive information on the name of the space, people schedule, number of people calculation method, the number of people per space floor area, the fraction radiant of people, the sensible heat fraction of people, an activity schedule of people, the thermal comfort model, and mean radiant temperature (MRT) calculation type, and generate people information.

The lights information generating module 234b may receive information on the name of the space, lights schedule, a design level calculation method, lights power per floor area, the return air fraction of the lights, the radiant fraction of the lights, the visible fraction of the lights, the end-use subcategory, whether to calculate the return air fraction from plenum temperature, and generate lights information.

The electric equipment information generating module 234c may receive information on the name of the space, electric equipment schedule, a design level calculation method, electric equipment power per floor area, the latent fraction of the electric equipment, the radiant fraction of the electric equipment, the lost fraction of the electric equipment, the end-use subcategory, and generate electric equipment information.

The infiltration information generation module 234d may receive information on the name of the space, an infiltration schedule, a design flow rate calculation method, the number of air change per hour, the constant term coefficient for calculation the design flow rate, the temperature term coefficient for calculation the design flow rate, the velocity term coefficient for calculation the design flow rate, the velocity squared term coefficient for calculation the design flow rate, and generate infiltration information.

The HVAC system module 234e may receive information on the setpoint temperature of the space and an HVAC system schedule, and generate HVAC system information, and the generated HVAC system information may be used to generate a space type code.

Based on the people information, the lights information, the electric equipment information, the infiltration information, and the HVAC system information, the space type code module 234 may generate a space type code.

The converting module 240 converts the building geometry 10, the coded material information 20, and the coded space type information 30, which are mapped through the mapping module 230. As described above, the converting module 240 may convert *.ifc files into *.idf files.

The converting module 240 may include building geometry converting module for converting the building geometry 10, a material information converting module for converting the coded material information 20, and a space type information converting module for converting the coded space type information 30. Furthermore, it is apparent to those skilled in the art that the converting module 240 may not be divided in the respective modules.

The simulating module 250 imports an energy simulation file 600 generated by the energy simulation program 300 which will be described below, and displays an energy simulation result.

Desirably, the energy simulation program 300 may be embedded in the middleware 200. In this case, the simulating module 250 may generate and load the energy simulation file 600 using the energy simulation program 300 embedded in the middleware 200 without a separate energy simulation program 300, and display the result.

The simulating module 250 includes a display module 251 and a reporting module 252, for example.

The display module 251 imports the energy simulation file 600 and displays the energy simulation result through a display unit (not illustrated). At this time, the energy simulation result and other energy simulation results stored in the middleware 200 may be simultaneously displayed to be compared with each other.

The reporting module 252 may generate a report file including the energy simulation result and the comparison data between the energy simulation result and other energy simulation results stored in the middleware 200. The report file may be created as a Word file, an Excel file or the like.

The energy simulation program 300 may load the energy simulation program file 500 generated by the middleware 200, and perform energy simulation.

Furthermore, the energy simulation program 300 may generate an energy simulation file 600 including energy simulation output variables. The energy simulation file 600 generated in such a manner may be used in the simulating module 250 of the middleware 200 as described above.

The energy simulation program 300 may include EnergyPlus, for example.

Furthermore, the energy simulation program 300 may include a program based on ISO 13790.

### Descriptions of Building Energy Simulation Method

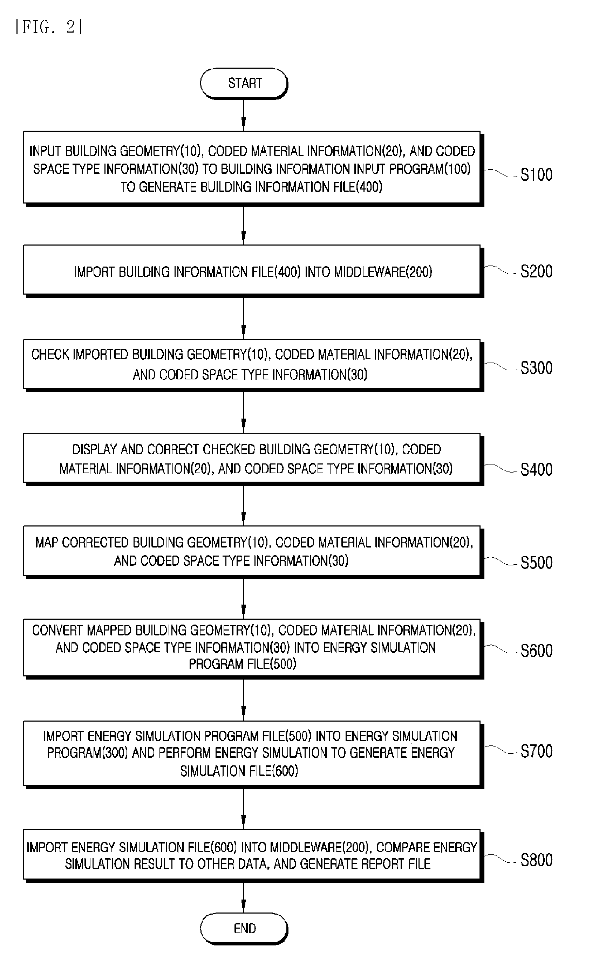

Hereinafter, a building energy simulation method according to an embodiment of the present invention will be described in detail with reference to FIGS. 2, 3A, 3B, 4, and 5.

The building energy simulation method according to the embodiment of the present invention includes: inputting building geometry 10, coded material information 20, and coded space type information 30 to the building information input program 100 to generate a building information file 400 at step S100; importing the building information file 400 into the middleware 200 at step S200; checking the imported building geometry 10, the imported coded material information 20, and the imported coded space type information 30 at step S300; displaying and correcting the checked building geometry 10, the checked coded material information 20, and the checked coded space type information 30 at step S400; mapping the corrected building geometry 10, the corrected coded material information 20, and the corrected coded space type information 30 at step S500; converting the mapped building geometry 10, the mapped coded material information 20, and the mapped coded space type information 30 into an energy simulation program file 500 at step S600; importing the energy simulation program file 500 into the energy simulation program 300 to generate an energy simulation file 600 through energy simulation at step S700; and importing the energy simulation file 600 into the middleware 200, comparing the energy simulation result to other data, and generating a report file at step S800.

S100: Inputting the building geometry 10, the coded material information 20, and the coded space type information 30 to the building information input program 100 to generate the building information file 400

The building information input program 100 may include a program which supports BIM, for example. The building geometry 10, the coded material information 20, and the coded space type information 30 may be inputted to the building information input program 100 to generate the building information file 400 with a file extension of .ifc.

S200: Importing the building information file 400 into the middleware 200

The middleware 200 may include IBEST, for example. The building information file 400 generated at step S100 may be imported into IBEST.

S300: Checking the imported building geometry 10, the imported coded material information 20, and the imported coded space type information 30

The checking module 210 of IBEST checks the building geometry 10, the coded material information 20, and the coded space type information 30, which are imported at step S200. That is, the checking module 210 may find an error in the building geometry 10, the coded material information 20, and the coded space type information 30.

Desirably, step S300 may include a debugging step of correcting the found error.

At this time, the building geometry simplifying module 211 may simplify the building geometry 10 by automatically generating an undefined space boundary among essential boundary conditions, and/or straightening a curved or atypical element, such that the building geometry 10 is suitable for a converting operation to be performed afterwards.

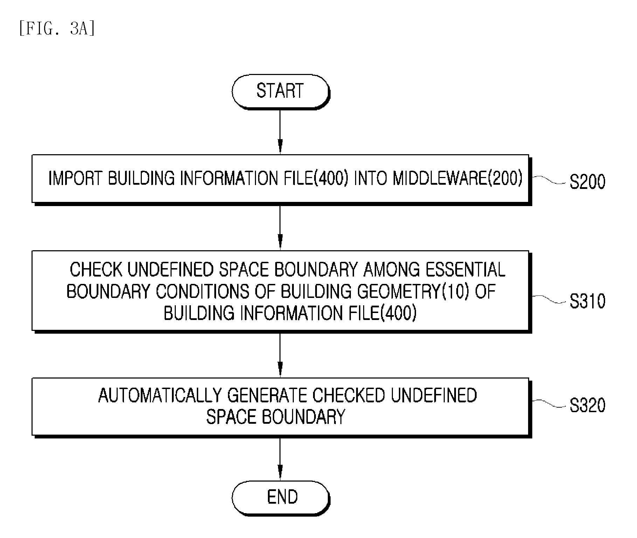

As illustrated in FIG. 3A, an example of the process for simplifying the building geometry may include importing the building information file 400 into the middleware 200 at step S200, checking an undefined space boundary among the essential boundary conditions of the building geometry 10 of the building information file 400 at step S310, and automatically generating the checked undefined space boundary at step S320.

At this time, the undefined space boundary among the essential boundary conditions may be formed in a simple building geometry as well as a complex building geometry, due to user error or the like.

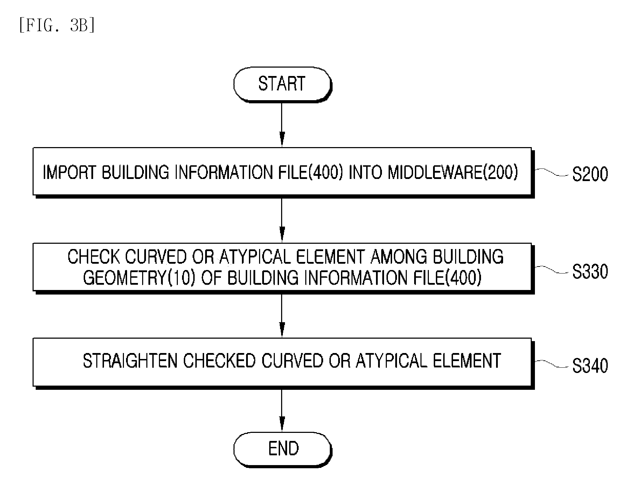

Furthermore, as illustrated in FIG. 3B, another example of the process for simplifying the building geometry may include importing the building information file 400 into the middleware 200 at step S200, checking a curved or atypical element of the building geometry 10 of the building information file 400 at step S330, and straightening the checked curved or atypical element at step S340. The straightening may be achieved by forming arbitrary points on the curved element and linearly connecting two adjacent points.

Desirably, the straight line formed by connecting the two points and a straight line adjacent to the formed straight line may form an angle of 5 to 10 • .

When the angle is smaller than 5 • , the hardware may become over imported, and when the angle is larger than 10 • , precision may be degraded.

Furthermore, the simplifying of the building geometry 10 may include setting a simplification degree depending on the building geometry 10. For example, the simplification degree may be set by checking contour information.

S400: Displaying and correcting the checked building geometry 10, the checked coded material information 20, and the checked coded space type information 30

The building geometry 10, the coded material information 20, and the coded space type information 30, which are checked at step S300, may be displayed through a display unit (not illustrated) such that a user can see the information.

The building geometry 10, the coded material information 20, and the coded space type information 30 may be interconnected and displayed through various methods. For example, attribute information for each building object may be checked and displayed in 3D graphics.

The displayed building geometry 10 and the displayed coded material information 20 may be checked and corrected by the user.

S500: Mapping the corrected building geometry 10, the corrected coded material information 20, and the corrected coded space type information 30

The building geometry 10, the coded material information 20, and the coded space type information 30, which are corrected at step S400, are mapped at step S500.

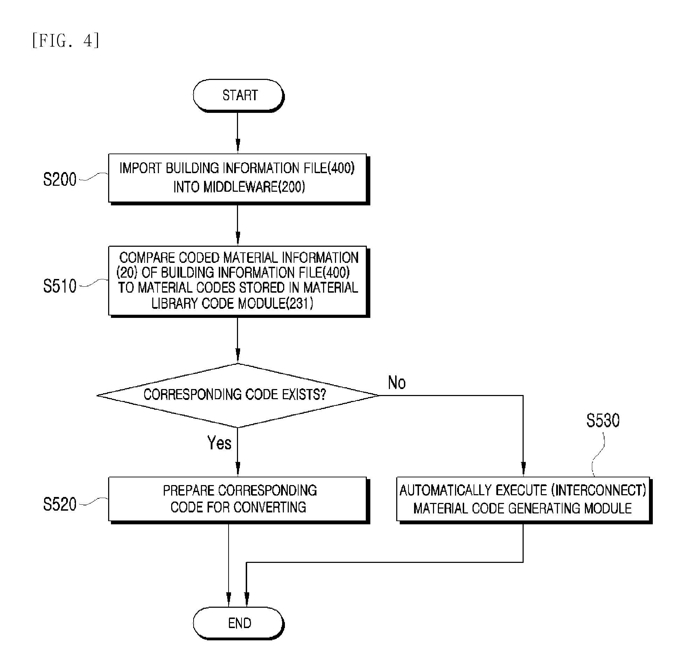

As illustrated in FIG. 4, an example of the mapping process may include importing the building information file 400 into the middleware 200 at step S200, and comparing the coded material information 20 of the building information file 400 to the material codes stored in the material library code module 231 at step S510.

When it is determined at step S510 that the material library code module 231 stores a material code corresponding to the coded material information 20, the corresponding material code is prepared for a converting operation at step S600.

On the other hand, when it is determined at step S510 that the material library code module 231 stores no material code corresponding to the coded material information 20, the material code generation module 232 is automatically executed and interconnected.

The user may generate a material code which is not stored in the material library code module 231 through the executed material code generating module 232.

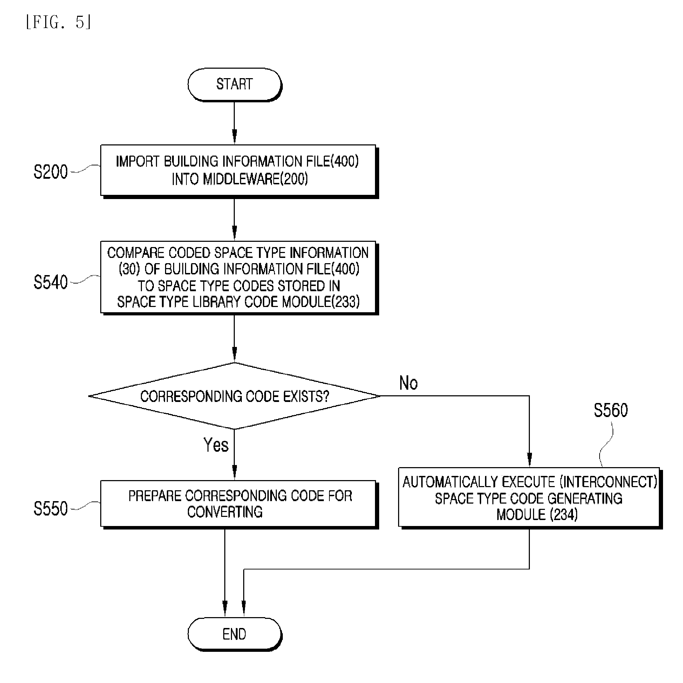

Furthermore, as illustrated in FIG. 5, another example of the mapping process may include importing the building information file 400 into the middleware 200 at step S200, and comparing the coded space type information 30 of the building information file 400 to the space type codes stored in the space type library code module 233 at step S540.

When it is determined at step S540 that the space type library code module 233 stores a space type code corresponding to the coded space type information 30, the corresponding space type code is prepared for the converting operation at step S600.

On the other hand, when it is determined at step S510 that the space type library code module 233 stores no space type code corresponding to the coded space type information 30, the space type code generation module 234 is automatically executed and interconnected.

The user may generate a space type code which is not stored in the space type library code module 233 through the executed space type code generating module 234.

S600: Converting the mapped building geometry 10, the mapped coded material information 20, and the mapped coded space type information 30 into the energy simulation program file 500

The building geometry 10, the coded material information 20, and the coded space type information 30, which are mapped at step S500, are converted into the energy simulation program file 500.

For example, the building geometry 10, the coded material information 20, and the coded space type information 30 may be converted into an energy simulation program file (*.idf) 500 and then imported into EnergyPlus.

S700: Importing the energy simulation program file 500 into the energy simulation program 300 and performing energy simulation to generate the energy simulation file 600

The energy simulation program file 500 generated at step S500 is imported into the energy simulation program 300 to perform energy simulation. At this time, the energy simulation result may be displayed through the display unit such that the user can see the energy simulation result.

Furthermore, the energy simulation file 600 including the energy simulation result may be generated at step S700.

As described above, the energy simulation program 300 may be embedded as one module of the middleware 200.

S800: Importing the energy simulation file 600 into the middleware 200, comparing the energy simulation result to other data, and generating a report file

The energy simulation file 600 generated at step S700 is imported into the middleware 200 and then displayed. Furthermore, other energy simulation results stored through the simulating module 250 may be displayed with the energy simulation file 600.

The energy simulation result and comparison data between the energy simulation result and other energy simulation results may be generated as a report file.

While the present invention has been described with reference to the preferred embodiments thereof, the present invention is not limited to the preferred embodiments. That is, it will be understood by those skilled in the art that various changes in form and details may be made therein without departing from the spirit and scope of the invention as defined by the appended claims.

## Claims

1. A building energy simulation method comprising the steps of:
(a) inputting building geometry and coded material information into a building information input program to generate a building information file;
(b) importing the building information file into a middleware;
(c) mapping the imported coded material information to the imported building geometry through the middleware; and
(d) converting the mapped building geometry and the mapped coded material information into an energy simulation program file through the middleware.
wherein step (b) comprises simplifying the imported building geometry, and
the simplifying of the imported building geometry comprises straightening curved and atypical elements.

2. The building energy simulation method of claim 1, further comprising the step (e) of importing the energy simulation program file into an energy simulation program to perform energy simulation, after the step (d).

3. The building energy simulation method of claim 1, further comprising the step (b') of checking the imported building geometry and the imported coded material information, after the step (b).

4. The building energy simulation method of claim 1, wherein the simplifying of the imported building geometry further comprises automatically generating an undefined space boundary among essential boundary conditions of the imported building geometry.

5. The building energy simulation method of claim 3, further comprising the step (b") of displaying the checked building geometry and the checked coded material information, after the step (b').

6. The building energy simulation method of claim 5, wherein the step (b") comprises correcting the displayed building geometry and the displayed coded material information.

7. The building energy simulation method of claim 1, wherein the step (c) comprises comparing the imported coded material information with material codes of a material library code module.

8. The building energy simulation method of claim 7, wherein when the material library code module has no material code corresponding to the imported coded material information, a material code generating module is interconnected.

9. The building energy simulation method of claim 8, wherein the material code generating module comprises a window code generating module, and
the window code generating module receives a heat transmission coefficient (U-factor) and a solar heat gain coefficient (SHGC), in which a glass type and a frame are considered, and generates a window code.

10. The building energy simulation method of claim 2, wherein the step (e) comprises performing energy simulation through the energy simulation program to generate an energy simulation file including the energy simulation result.

11. The building energy simulation method of claim 10, wherein the building energy simulation method comprises the step (f) of importing the energy simulation file into the middleware, after step (e), and
the energy simulation result of the imported energy simulation file is displayed through the middleware, data for comparison to previously stored energy simulation results are displayed on the middleware, and the energy simulation result and the comparison data are generated as a report file.

12. The building energy simulation method of claim 1, wherein the building information input program supports building information modeling (BIM).

13. The building energy simulation method of claim 1, wherein the middleware comprises an interoperable building energy simulation tool (IBEST).

14. The building energy simulation method of claim 2, wherein the energy simulation program comprises EnergyPlus.

15. The building energy simulation method of claim 2, wherein the energy simulation program comprises a program based on ISO 13790.

16. A building energy simulation method comprising the steps of:
(a) inputting building geometry, coded material information, and coded space type information to a building information input program to generate a building information file;
(b) importing the building information file into a middleware;
(c) mapping the imported coded material information and the imported coded space type information to the imported building geometry through the middleware; and
(d) converting the mapped building geometry, the mapped coded material information, and the mapped coded space type information into an energy simulation program file through the middleware.

17. The building energy simulation method of claim 16, wherein the step (c) comprises comparing the imported coded space type information to space type codes of a space type library code module.

18. The building energy simulation method of claim 17, wherein when the space type library code module has no space type code corresponding to the imported coded space type information, a space type code generating module is interconnected.
